# EUROPEAN PATENT APPLICATION

(11) **EP 2 511 180 A1**
(43) Date of publication of application: **17.10.2012**
(21) Application number: 12162770.7
(22) Date of filing: 30.03.2012
(51) Int. Cl.: B64G 6/00, B63C 11/10

(54) **Hard upper torso for rear entry suit**

(30) Priority: 05.07.2011 US 201113175994; 12.04.2011 US 201161474443 P
(71) Applicant: Hamilton Sundstrand Space Systems International, Inc., Windsor Locks, CT 06096 (US)
(72) Inventor: Thomas, Kenneth S., Manchester, CT Connecticut 06040 (US)
(74) Representative: Tomlinson, Kerry John

(57) **Abstract**

A suit (10) includes a hard upper torso (14) having an entry opening (28) and shoulder apertures (22). The hard upper torso extends along a subject axis (34) configured to coincide with an axis of a subject having donned the suit. The entry opening lies in a plane at an angle 7° +/-5° relative to the subject axis. The hard upper torso also includes non-circular shoulder apertures in one embodiment. In one example, the hard upper torso includes a waist bearing (18A) lying at an angle of 63° +/- 5° relative to the entry opening plane.

## Description

### BACKGROUND

This disclosure relates to a suit for use in extra vehicular activities (EVA) such as lunar or Martian landscape exploration.

EVA pressure suits have been proposed in which the subject enters from the rear of a hard upper torso (HUT). The HUT provides the visor and includes shoulder apertures and an entry opening, typically in the rear of the HUT to permit entry into the suit by the subject from an interior of a vehicle. Any primary and secondary life support systems are typically located behind the rear entry opening and pressure suit. Pressure suits should provide ease of entry by the subject as well as good mobility.

### SUMMARY

A suit includes a hard upper torso having an entry opening and shoulder apertures. The hard upper torso extends along a subject axis configured to coincide with an axis of a subject having donned the suit. The entry opening lies in a plane at an angle of 7° +/-5° relative to the subject axis.

Viewed from a second aspect, the present invention provides a suit comprising a hard upper torso including an entry opening and shoulder apertures, the hard upper torso extending along a subject axis configured to coincide with an axis of a subject having donned the suit, and a waist bearing at an angle of 63° +/- 5° relative to the entry opening.

Viewed from a third aspect, the present invention provides a suit comprising a hard upper torso including an entry opening and non-circular shoulder apertures.

### BRIEF DESCRIPTION OF THE DRAWINGS

The disclosure can be further understood by reference to the following detailed description when considered in connection with the accompanying drawings wherein:
Figure 1A illustrates a subject donning a suit having a hard upper torso (HUT).
Figure 1B illustrates subject with the suit donned.
Figure 2A is a front view of the HUT.
Figure 2B is a side cross-sectional view of the HUT with a load plate.
Figure 3A is a side view of the HUT.
Figure 3B is a cross-sectional view taken along line 3B-3B of Figure 2A.
Figure 3C is a side view of the HUT taken in a directional plane 3A-3A of Figure 3B.

### DETAILED DESCRIPTION

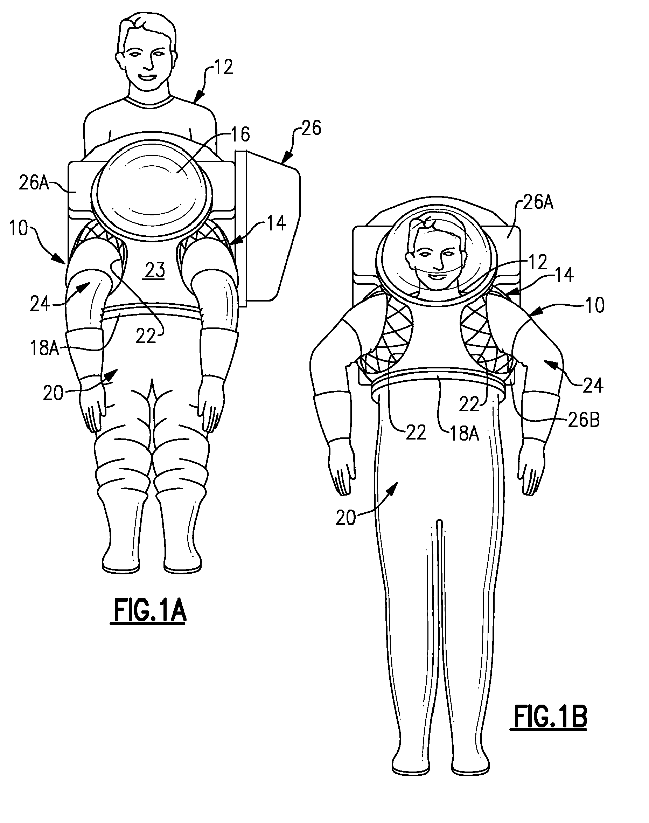

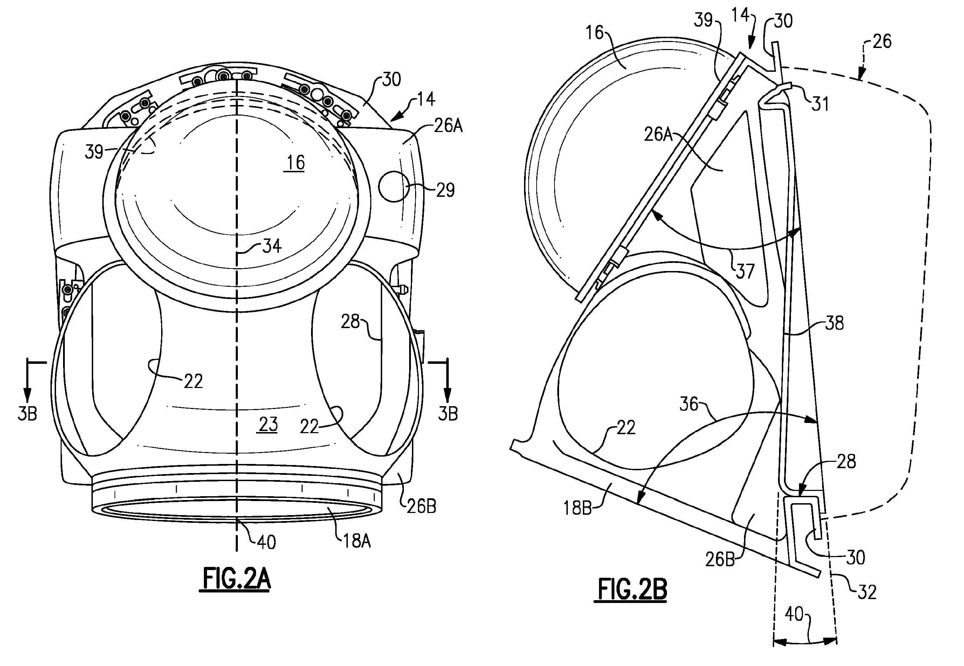

Figure 1A and 1B depict a suit 10 for use by a subject 12 in extra vehicular activity for surface missions to asteroids, Mars and other such applications. The example suit 10 is of a type having a rear entry system. The suit 10 includes a hard upper torso (HUT) 14 with a waist bearing 18A that attaches to the bottom flange 18B of the HUT. The HUT 14 includes a shell 23 that supports a visor 16 and portions of a primary life support system (PLSS) 26, which are located inside HUT protrusions 26A and 26B, for example, and outside the entry opening 28 (in PLSS 26) through which a subject dons the suit. The PLSS cover 26 is closed over the entry opening 28, best shown in Figures 2A and 2B.

The protrusions 26A, 26B may be volumes inside the HUT 14 or protective covers for volumes outside the pressure volume. The protrusion volumes can be shaped to utilize the maximum HUT width while avoiding impingement on arm movement. Placement of primary life support system elements in the HUT protrusions 26A, 26B reduces the PLSS mass and volume behind the subject 12 during EVA. This redistribution moves the PLSS mass closer to the subject's center of gravity for improved mass control during subject movement while providing a more front-to-back compact suit system envelope. The protrusions 26A, 26B may also provide a mounting area 29 to which lights or other devices may be attached external to the HUT 14.

The visor 16 may include spaced apart layers or shells. Shoulder apertures 22 are provided in the shell 23 at a fixed spacing relative to one another. The suit 10 has a HUT 14 providing arms arranged at the shoulder apertures 22.

The HUT 14 is shown in more detail in Figures 2A-3C. The HUT 14 extends along a subject axis 34, which coincides with the axis along which the subject 12 extends when the suit 10 is donned. The entry opening 28 is provided in the rear of the HUT 14, through which the subject 12 enters during donning of the suit 10. The entry opening 28 is surrounded by a flange 30, which lies in a plane 32 and to which the PLSS 26 is mounted. A load plate 38, which is secured to the subject 12 via a harness, is located within the entry opening 28 to carry the load of the suit 10 on the subject 12. The load plate 38 lies in a plane that is at an angle 40 relative to the plane 32 of 7° +/- 5°. The subject axis 34 is generally parallel to the load plate 38. The visor 16 is secured to a visor opening 39 in the HUT 14 that lies in plane at an angle 37 relative to the plane 32 of 40° +/- 5°.

The waist bearing 18A is at an angle 36 relative to the plane 32 of 63° +/- 5°. The rearmost portion HUT bottom flange 48 is in close proximity to the habitat mating surface of the rear HUT flange 30. The waist bearing 18 is configured such that the front of the waist bearing 18 is positioned at sternum-height on the subject 12 once donned (Figure 1B) to permit increased torso mobility. Larger waist bearing angles that could provide a larger entry opening may inhibit upper torso mobility by interfering with lower back and waist movements.

The HUT rear flange 30 extends vertically above the outside of the visor 16. The top of the entry opening 28 has a wall 31 that extends from the flange 30, in a direction that is approximately perpendicular to the subject axis 34, such that the top of the entry opening 28 is about level with the inside of the visor 16. The positioning of the entry opening 28 relative to the visor 16 in this manner enables the subject easy entry into the suit 10 while avoiding the need to reposition the HUT 14 upward or downward significantly subsequent to donning the suit in order to locate the subject's head within the visor 16.

The HUT 14 shell 23 may be of hybrid (two or more different fiber systems) composite construction. The shoulder apertures 22 may be non-circular, and in the example, elliptical. The shoulder apertures 22 may be other shapes. The shoulder apertures 22 lie in planes that are canted forward and inward (at the top) relative to one another, as best shown in Figure 2A.

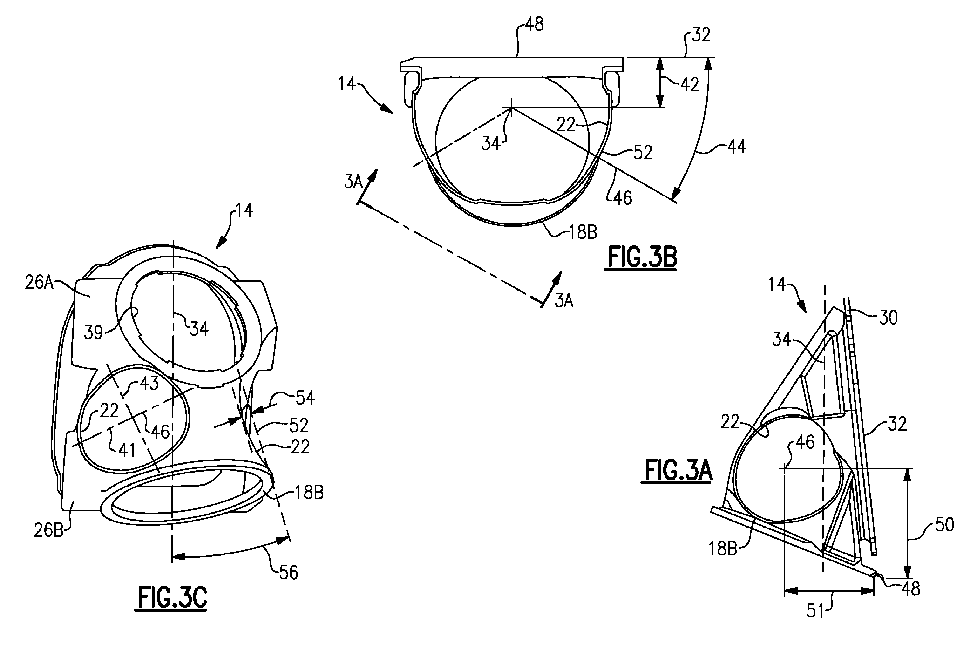

Referring to Figures 3A-3C, the elliptical arm apertures have minor and major axes 41, 43 at a right angle to one another, which are sized to accommodate a variety of different sized subjects. An axis 46 extending at a right angle through the intersection of the minor and major axes 41, 43 of each ellipse and intersects the subject axis 34, as best illustrated in Figure 3B. The axis 46 is located a distance 50 from the rearmost portion of the HUT bottom flange 48 with the subject axis 34. In one example, the distance 50 is 10.8 +/- 1.0 inch (274 +/- 25 mm). The subject axis 34 is at a distance 42 of 5.1 +/- 1.0 inch (130 +/- 25 mm) from the rearmost portion 48. The axis 46 is located a distance 51 from the rearmost portion of the HUT bottom flange 48 that is perpendicular to the subject axis 34, for example, 9.3 +/- 1.0 inch (236 +/- 25 mm). The axis 46 is at an angle 44 of 29° +/- 5° from the plane 32.

View A-A illustrated in Figure 3B is parallel to the axis 46, thus depicting the shoulder aperture 22 generally lying in a plane 52. The plane 52 is perpendicular to the axis 46 and at an angle 56 of 17° +/- 5° relative to the subject axis 34. The forward and rearward portions of the shoulder aperture 22 along the major axis 41 are recessed into the shell 23 a distance 54 from the plane 52. The distance 54 is 1 +/- 0.5 inch (25 +/- 12 mm).

The elliptical shape and orientation of the shoulder apertures 22 in the shell 23 better facilitate insertion of the subject's arms into the HUT 14 during donning of the suit 10.

Although an example embodiment has been disclosed, a worker of ordinary skill in this art would recognize that certain modifications would come within the scope of the claims. For that reason, the following claims should be studied to determine their true scope and content.

## Claims

1. A suit comprising:
a hard upper torso including an entry opening and shoulder apertures, the hard upper torso extending along a subject axis configured to coincide with an axis of a subject having donned the suit, the entry opening lying in a plane at an angle of 7° +/-5° relative to the subject axis.

2. The suit according to claim 1, wherein the hard upper torso includes a waist bearing at an angle of 63° +/- 5° relative to the entry opening; preferably wherein the hard upper torso includes a flange that provides the entry opening, the flange being in close proximity to a rearmost portion of the waist bearing, the waist bearing being configured such that the front of the waist bearing is positioned at sternum-height on the subject once donned.

3. The suit according to claim 1 or 2, wherein the hard upper torso includes a visor, a top of the entry opening has a wall that extends from the flange in a direction that is approximately perpendicular to the subject axis such that the top of the entry opening is about level with a visor opening over which the visor is secured, the visor opening being at an angle of 40° +/- 5° relative to the entry opening.

4. The suit according to claim 1, 2 or 3, wherein the shoulder apertures are non-circular.

5. The suit according to claim 4, wherein the hard upper torso extends along a subject axis configured to coincide with an axis of a subject having donned the suit, the shoulder apertures lying in planes canted forward and inward relative to one another; preferably wherein each shoulder aperture plane includes an axis intersecting the subject axis at an angle of 29° +/- 5° relative to the entry opening, and /or wherein the shoulder aperture planes are at an angle of 17° +/- 5° relative to the subject axis.

6. The suit according to claim 4 or 5, wherein the non-circular apertures have an elliptical shape; preferably wherein the elliptical shape includes minor and major axes, the shoulder apertures being recessed from the shoulder aperture planes a distance of 1.0 +/- 0.5 inch along the major axes.

7. A suit comprising:
a hard upper torso including an entry opening and shoulder apertures, the hard upper torso extending along a subject axis configured to coincide with an axis of a subject having donned the suit, and a waist bearing at an angle of 63° +/- 5° relative to the entry opening.

8. The suit according to claim 7, wherein the hard upper torso includes a flange that provides the entry opening, the flange being in close proximity to a rearmost portion of the waist bearing, the waist bearing being configured such that the front of the waist bearing is positioned at sternum-height on the subject once donned, the entry opening being at an angle of 7° +/- 5° relative to the subject axis.

9. The suit according to claim 7 or 8, wherein the shoulder apertures are non-circular, preferably wherein the non-circular apertures have an elliptical shape; and more preferably wherein the elliptical shape includes minor and major axes, the shoulder apertures being recessed from the shoulder aperture planes a distance of 1.0 +/- 0.5 inch along the major axes.

10. The suit according to claim 9, wherein the hard upper torso extends along a subject axis configured to coincide with an axis of a subject having donned the suit, the shoulder apertures lying in planes canted forward and inward relative to one another; preferably wherein each shoulder aperture plane includes an axis intersecting the subject axis at an angle of 29° +/- 5° relative to the entry opening. and /or wherein the shoulder aperture planes are at an angle of 17° +/- 5° relative to the subject axis.

11. A suit comprising:
a hard upper torso including an entry opening and non-circular shoulder apertures.

12. The suit according to claim 11, wherein the hard upper torso extends along a subject axis configured to coincide with an axis of a subject having donned the suit, the shoulder apertures lying in planes canted forward and inward relative to one another; preferably wherein each shoulder aperture plane includes an axis intersecting the subject axis at an angle of 29° +/- 5° relative to the entry opening. and /or wherein the shoulder aperture planes are at an angle of 17° +/- 5° relative to the subject axis.

13. The suit according to claim 11 or 12, wherein the non-circular apertures have an elliptical shape; preferably wherein the elliptical shape includes minor and major axes, the shoulder apertures being recessed from the shoulder aperture planes a distance of 1.0 +/- 0.5 inch along the major axes.

14. The suit according to claim 11, 12 or 13, wherein the hard upper torso is configured to extend along a subject axis configured to coincide with an axis of a subject having donned the suit, the entry opening lying in a plane at an angle of 7° +/-5° relative to the subject axis.

15. The suit according to claim 11, 12, 13 or 14, wherein the hard upper torso includes a waist bearing at an angle of 63° +/- 5° relative to the entry opening; preferably wherein the hard upper torso includes a flange that provides the entry opening, the flange being in close proximity to a rearmost portion of the waist bearing, the waist bearing being configured such that the front of the waist bearing is positioned at sternum-height on the subject once donned.
